# EUROPEAN PATENT SPECIFICATION

(11) **EP 4 339 476 B1**
(45) Date of publication and mention of the grant of the patent: **02.04.2025**
(21) Application number: 23194051.1
(22) Date of filing: 29.08.2023
(51) Int. Cl.: F16D 41/07

(54) **ONE-WAY CLUTCH**
EINWEGKUPPLUNG
EMBRAYAGE UNIDIRECTIONNEL

(30) Priority: 14.09.2022 JP 2022146292; 15.09.2022 JP 2022147174
(43) Date of publication of application: 20.03.2024
(73) Proprietor: NSK-WARNER K.K., Tokyo 141-8560 (JP)
(72) Inventor: OZAWA, Yoshiya, Shizuoka-ken, 437-8545 (JP); SHIBATA, Hiroshi, Shizuoka-ken, 437-8545 (JP)
(74) Representative: Cross, James Peter Archibald

(56) References cited:
- US-A- 4 989 705
- US-A- 5 894 915

## Description

### TECHNICAL FIELD

The present invention relates to a one-way clutch used for transmitting a torque in vehicles or industrial machinery.

### BACKGROUND ART

Conventionally, in a one-way clutch equipped with a mechanism for locking rotation transmissions in one direction and in the direction opposite thereto, there is known one whose retainer ring as a constitutional element, has a bearing function (For example, refer to Patent document 1). The retainer ring of the one-way clutch of the Patent document 1 is formed by bearing material such as an alloy or the like and has a configuration which improves an effect restricting abrasion of a cam that is a torque transmitting element received or held in the retaining ring.

Patent Document 1: Japan Patent Application laid-open No.H7-208506

In recent years, in vehicles or the like, weight reductions of mechanical elements or devices are strictly needed. And, in automatic transmission that is a device in which a one-way clutch is used, a resin retainer as a constitutional element for a one-way clutch is taken into consideration. The one-way clutch in the Patent document 1 has a retainer whose portions receiving cam members are configured to meet with the peripheries of cam members received therein. For this reason, there is a concern that, in a case where a retainer ring formed of a resin is adopted, cam members might bite into or jam the cam receiving portions unless stable operation of inner and outer races of the clutch is attained, thereby making impossible to release the locked state and making the one-way clutch inoperable. In order to prevent such biting or jams of the cam members, it is necessary to realize a stable operation of the outer race and the inner race of the one-way clutch.

The present invention has been made in view of the above-described circumstances, and an object of the present invention is to provide a one-way clutch which can realize a stable operation and also attain weight reduction of a one-way clutch.
US 5 894 915 A relates to a one way clutch which is incorporated between a driving shaft and a driven shaft and has a function of transferring only power in a one way rotation of the driving shaft to the driven shaft.

### STATEMENT OF INVENTION

To solve the above problem, according to the present invention, there is provided a one-way clutch having an inner race, an outer race arranged on a center axis of said inner race coaxially therewith, a plurality of cam members interposed between said inner race and said outer race to serve torque transmission between said inner race and said outer race, a retainer member for holding the plurality of said cam members, and a spring member biassing the plurality of said cam members to no torque transmitting positions, being characterized in that:
the retainer member is provided with a plurality of bearing portions supporting an inner circumferential surface of said outer race and the same number of holding portions as the number of said bearing portions, the holding portions each holding two or more predetermined number of said cam members with predetermined interval along the circumferential direction,
the plurality of said bearing portions is respectively arranged, with respect to said center axis, at diagonal positions along the circumferential direction equiangularly, the plurality of said holding portions is respectively arranged, with respect to said center axis, at diagonal positions along the circumferential direction equiangularly, and
the plurality of said bearing portions and the plurality of said holding portions are arranged alternately along the circumferential direction.

The present invention can provide a structure of a one-way clutch that enables a stable operation and a reduction of weight.

### BRIEF DESCRIPTION OF DRAWINGS

Fig. 1 is a front view showing a one-way clutch according to an embodiment of the present invention, seen from one axial direction.
Fig. 2 is a side view of the one-way clutch according to the embodiment, seen from a radial direction.
Fig. 3 is a perspective view showing an appearance of the one-way clutch according to the embodiment of the present invention.
Figs. 4A and 4B are enlarged cross sectional views of an essential portion, showing states of a cam member of the one-way clutch according to the embodiment, Fig. 4A showing no torque loaded state and Fig. 4B showing torque-loaded state.
Fig. 5A is a perspective view of a retainer, and Fig. 5B is a side view of the retainer.

### EMBODIMENT FOR CARRYING OUT THE INVENTION

In the following, an embodiment of the one-way clutch according to the present invention will be described with reference to the accompanying drawings. The embodiment will be described with respect to the one-way clutch of a type in which an inner race is a driving side and an outer race is a driven side, torque being transmitted from the inner race to the outer race.

At first, directions relating to the one-way clutch according to the embodiment of the present invention, will be defined. In the description of the present embodiment, the term "center axis C " refers to the center axis of the one-way clutch, that is, the center axis of the outer race or the inner race, and the terms "axial direction", "radial direction", and "circumferential direction" respectively refer to the axial direction, radial direction, and circumferential direction with respect to that center axis C.

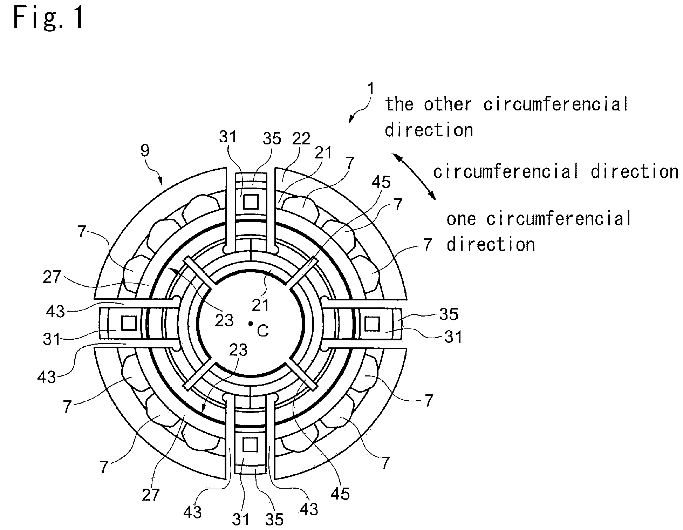

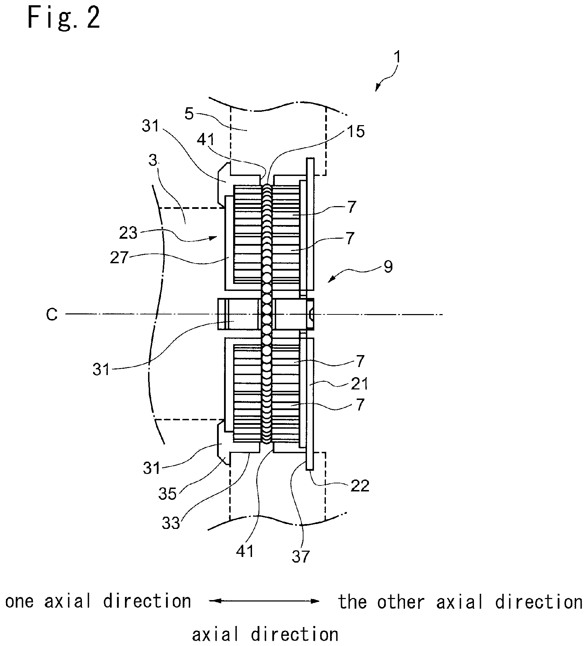

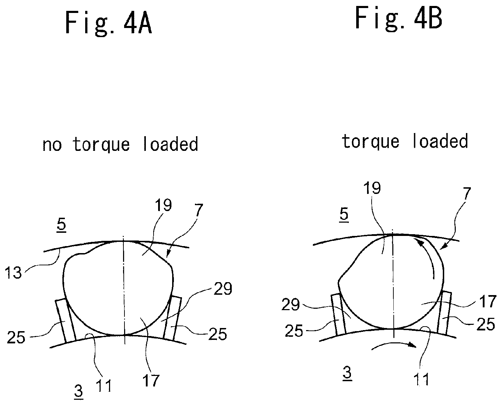

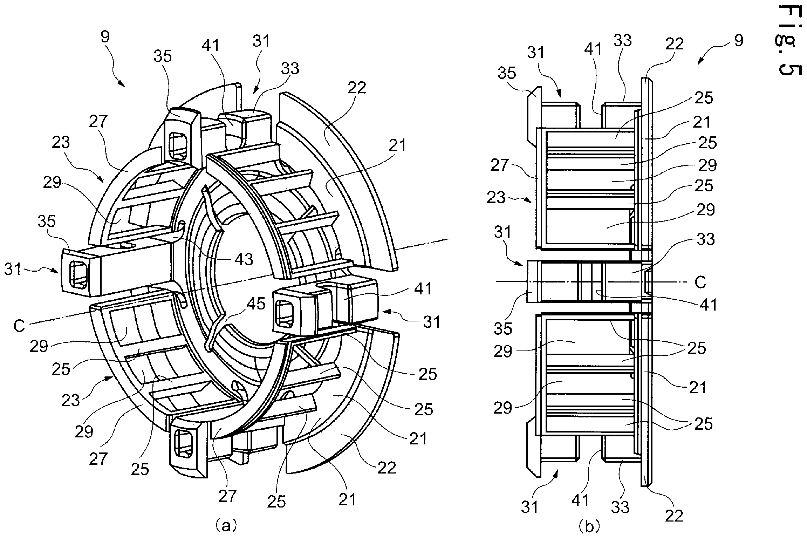

As to the axial direction, the term "one axial direction" refers to the axial direction approaching the viewer on the front side of the plane of the drawing sheet of each of Figs. 1, 4A and 4B, and the term "the other axial direction" refers to the axial direction becoming distant away from the viewer on the back side of the plane of the drawing sheet of each of Figs. 1, 4A and 4B. In Figs. 2 and 5B, the left side of the drawing sheet is the one axial side, and the right side of the drawing sheet is the other axial side. As to the circumferential direction, in each of Figs. 1, 4A and 4B, the term "one circumferential direction" refers to the clockwise rotating direction toward the drawing sheet, and the term "the other circumferential direction" refers to the counter clockwise rotating direction toward the drawing sheet.

Meanwhile, with respect to the rotational direction of the one-way clutch, for convenience sake, explanation will be made with respect to the rotational direction of the inner race relative to the outer race, but rotation of the outer race and rotation of the inner race are relative to each other. For example, in a case where the inner race is rotatable clockwise, the outer race is rotatable counterclockwise, and even in a case where the inner race and the outer race rotate in the same direction, if rotational speeds of the outer race and inner race differ from each other, it is possible to say that the outer race or the inner race rotates relatively in either direction.
Fig. 1 is a front view of a one-way clutch 1 according to the embodiment showing a state seen from the one axial side.
Fig. 2 is a side view of the one-way clutch 1 according to the embodiment showing a state seen from the radial direction.

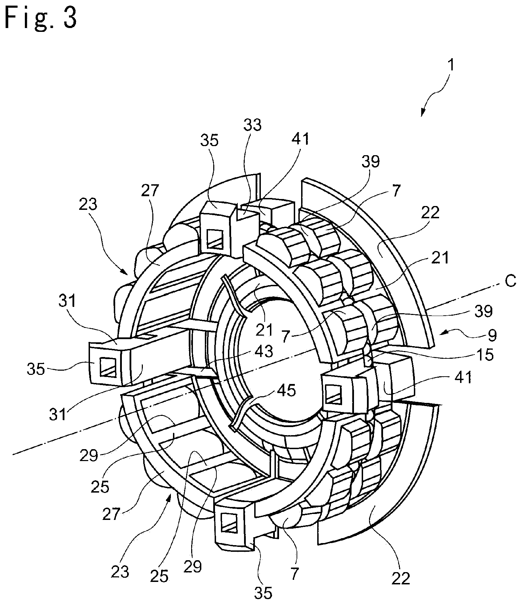

Fig. 3 is a perspective view showing an appearance of the one-way clutch 1 according to the embodiment.
Meanwhile, the inner race 3 and the outer race 5 are shown by imaginary lines in Fig. 2, and are omitted in Fig. 1 and Fig.3.
Figs. 4A and 4B is enlarged cross sectional views of an essential portion, showing states of a cam member 7 of the one-way clutch 1 according to the embodiment, Fig. 4A showing no torque loaded state and Fig. 4B showing a torque loaded state.

As shown in each of Figs. 1 to 4, the one-way clutch 1 according to the present embodiment includes an inner race 3 and an outer race 5 arranged coaxially on the center axis C, a plurality of cam members 7 interposed between the inner race 3 and the outer race 5, a ring-shaped retainer 9 for holding the plurality of the cam members 7, and a spring member 15 biassing the plurality of the cam members 7 into a direction to be in contact with the inner circumferential surface 11 of the outer race and the outer circumferential surface 13 of the inner race (refer to Figs. 4A and 4B) in no torque transmitting state. In the present embodiment, the spring member 15 is a garter spring.

The plurality of cam members 7 are torque-transmitting members which are brought into engagement with the outer peripheral surface 11 of the inner race 3 and the inner peripheral surface 13 of the outer race 5 to transmit torque from the inner race 3 to the outer race 5. The cam members 7 each is column-shaped whose peripheral surface is curved. A cross-section of the cam member 7 has a shape which is a combination of a semicircular portion 17 and an inflated or bulged portion 19 that inflates or bulges outwardly from a line connecting both ends of a circle arc of the semicircular portion 17, as shown in Figs. 4A and 4B. The inflated or bulged portion 19 has a top portion that is round and gently mountainous. And an end of the contour of the inflated or bulged portion 19 and the other end of the contour of the inflated or bulged portion 19 are smoothly continuous to, respectively, an end of the arc of the semicircular portion 17 and the other end of the arc of the semicircular portion 17. The cam member 7 is so formed that the length of the straight line connecting the top portion of the inflated or bulged portion 19 and the bottom of the arc of the semicircular portion 17 is shorter than the length connecting the vicinities of both ends of the arc of the semicircular portion 17.

Fig. 5A is a perspective view showing an appearance of the retainer 9, and Fig. 5B is a side view of the retainer 9.

In the present embodiment, the retainer 9 as a whole is formed integrally of a resin. The retainer 9 is integrally provided with an annular plate 21 arranged at the other axial side of the inner race 3 and the other axial side of the outer race 5 on the center axis C and the plurality of the cam member holding portions 23 projected from the one axial side surface of the annular plate 21 in the one axial direction thereof. In the present embodiment, there are four cam member holding portions 23.

Next, a structure of one of the cam member holding portions 23 will be explained. The remaining cam member holding portions 23 have the same structure.

The cam member holding portion 23 is integrally composed of a plurality of column portions 25 arranged equidistantly in the circumferential direction and projected from the one axial side surface of the annular plate 21 to the one axial direction and an arcuate flange 27 integrally connecting the one axial side ends of the plurality of the column portions 25. Accordingly, the cam member holding portion 23 is partial-cylindrical. In the present embodiment, there are four column portions 25.

The cross section of the column portion 25 is rectangular and shaped to be formed by radially extended sides and circumferentially extended sides, as shown in each of Figs. 4A and 4B. In the present embodiment, the cross section of the column portion 25 has an oblong shape whose radially extended sides are longer than circumferentially extended sides. The inner circumferential surfaces of the respective column portions 25 and the inner circumferential surface of the flange portion 27 are smoothly continuous and arranged on the surface of an imaginary cylinder centered on the center axis C.

The cam member holding portion 23 has three window portions 29 radially formed therethrough arranged equidistantly in the circumferential direction, defined by four column portions 25, the flange portion 27 and a portion of the annular plate 21. In more detail, each window portion 29 is defined by a pair of column portions 25 neighboring each other in the circumferential direction, a portion of the flange 27 and a portion of the annular plate 21 axially opposed to each other between the pair of the column portions 25 neighboring each other. In each of the window portions 29, one cam member 7 is swingably held, as described later.

Four cam member holding portions 23 having respectively such configurations as above described are arranged circumferentially equally spaced on the circumference of an imaginal circle centered on the center axis C, seen from the axial direction. Accordingly, the inner circumferential surface of each column member 25 and the inner circumferential surface of each flange portion 27 of the four holding portions 23 are arranged on one imaginary cylindrical surface centered on the center axis C.

The retainer 9 is further formed with a plurality of bearing portions 31 each being rectangular-column shaped and projected from the one axial side surface of the annular plate 21 in the one axial direction. The number of the bearing portions 31 is the same as the number of the cam member holding portions 23. Accordingly, in the present embodiment, there are four bearing portions 31. The bearing portions 31 and the cam member holding portions 23 are arranged alternately in the circumferential direction. Concretely, one bearing portion 31 is arranged between the circumferentially neighboring cam member holding portions 23. Accordingly, the plurality of the cam member holding portions 23 and the plurality of the bearing portions 31 are arranged alternately on the circumference of one imaginary circle centered on the center axis C, viewed from the axial direction. As configured above, the four bearing portions 31 are arranged on the diagonal positions of equal angles over the circumferential direction, in other words, 90 °distant angular positions over the circumferential direction with respect to the center axis C, seen from the axial direction.

The inner circumferential surface of the bearing portion 31 is arranged on an imaginary cylindrical surface that differs from the inner circumferential surface of the cam member holding portions 23, that is, the inner circumferential surfaces of the column portions 25 and the inner circumferential surface of the inner cylindrical surface of the flange portion 27. The plurality of the cam member holding portions 23 and the plurality of the bearing portions 31 are arranged between the outer peripheral surface 11 of the inner race 3 and the inner13 peripheral surface 11 of the outer race 5. The inner race 3 is arranged at the radially inner side of the bearing portions 31 and the cam member holding portions 23, as shown in Fig. 2.

The bearing portions 31 support, on the outer circumferential surfaces thereof, the outer race 5. The outer circumferential surface 33 of the bearing portion 31 may be a curved surface having a curvature radius differing from that of the inner peripheral surface 13 of the outer race 5. The one axial side end of the bearing portion 31 is formed with a flange portion 35 projected radially outwardly.
The annular plate 21 is formed with a flange portion 22 which is more radially outwardly extended than a portion of the annular plate 21 formed with the plurality of the cam member holding portions 23 and the plurality of the bearing portions 31.
The retainer 9 is arranged such that the flange portion 22 of the annular plate 21 is fitted in a circumferentially extended groove 37 formed on the inner peripheral surface 13 of the outer race 5, and the flange portion 35 of the bearing portion 31 is opposed in the axial direction to the one axial side end of the outer race 5. Thus, the retainer 9 is fixed to the outer race 5 to be impossible to move in the axial direction and impossible to rotate relatively in the circumferential direction.

The plurality of the cam members 7 are fitted in the window portions 29 of the retainer 9 respectively with one to one relationship from the radially outer side, with the axial direction of each cam member 7 being the same as the axial direction of the one-way clutch 1. Thus, the plurality of the cam members 7 are held circumferentially by the retainer 9. One cam member holding member 23 holds a plurality of the cam members 7 equiangularly in the circumferential direction. In the present embodiment, three cam members 7 are held in the one cam member holding portion 23. Surfaces of the opposite ends of each cam member 7 are located inside of a portion of the flange 27 and a portion of the annular plate 21 axially opposed to each other in the window portion 29 of the retainer 9. In other words, the axial size of the cam member 7 is smaller than the axial size of the window portion 9. As shown in Fig. 4A, in no torque loaded state, the semicircular portion 17 of the cam member 7 faces the inner race 3 and the bottom of the semicircular portion 17 is in contact with the outer peripheral surface 11 of the inner race 3, while the bulged portion 19 faces the outer race 5 and the top of the bulged portion 19 is in contact with the inner peripheral surface 13 of the outer race 5.

A circumference of the semicircular portion 17 of the cam member 7 is in contact with the pair of column portions 25 defining the window portion 29 of the retainer 9, and a part of the semicircular portion 17 passes through the window portion 29 of the retainer 9 and projects radially more inwardly than the pair of column portions 25. As described, by the pair of column portions 25 arranged in contact with the periphery of the cam member 7, the cam member 7 is held in the window portion 29 of the retainer 9 and in contact with the outer circumferential surface 11 of inner race 3 stably. With such a configuration, the cam member 7 may swing in slide-contact with the pair of column portions 25 and the movement of the cam member 7 in the axial direction is restricted by the flange 27 and the annular plate 21.

As shown in Fig. 3, each cam member 7, at the radially outer portion thereof in the assembled state, is formed with a groove 39 extended in the circumferential direction of the inner race 3 or the outer race 5. The groove 39 is formed in the axially central portion of the radially outer peripheral portion of the cam member 7, and is formed circumferentially through the radially outer peripheral portion of the cam member 7. The groove 39 has a depth reaching the vicinity of the central portion of the cam member 7. Also, each bearing portion 31, at the radially outer portion thereof, is formed with a groove 41 extended in the circumferential direction.

The bearing portion 31 is formed, at the axially central portion of the radially outer circumferential portion thereof, with the groove 41. The groove 41 is formed circumferentially through the radially outer circumferential portion of the bearing portion 31 and has a depth reaching the vicinity of the central portion of the bearing portion 31.

One annular spring member 15 is provided through the grooves 39 of the respective cam members 7 and the grooves 41 of the respective bearing portions 31. The spring member 15 biases the respective cam members 7 radially inwardly. The bottom surface of the groove 39 of each cam member 7 is formed in a mountain shape having an angle such that the cam members 7, with biased radially inwardly by the spring member 15, swing in the direction in which the cam members 7 are in contact with the outer peripheral surface 11 of the inner race 3 and the inner circumferential surface 13 of the outer race 5. Accordingly, the respective cam members 7 are biased radially inwardly by the elastic force of the spring member 15 to be always in contact with the outer circumferential surface 11 of the inner race 3 and the inner peripheral surface 13 of the outer race 5. In this state of contact of each cam member 7 with the outer peripheral surface 11 of the inner race 3 and the inner peripheral surface 13 of the outer race 5, as shown in Fig. 4A, no torque is transmitted. As described, the spring member 15 biases the respective cam members 7 into no torque transmitting positions.

The annular plate 21 and the flange portion 22 of the retainer 9 are formed with cut-away portions 43, on the circumferential one side and circumferential other side of each bearing portion 31, each extending radially. The cut-away portion 43 is so formed to open toward radially outer side of the flange portion 22 and extend radially to a radially more inner position than the cam member holding portion 23. Further, the annular plate 21 is formed with four cut-away portions 45, each opening toward radially inner side and extending radially to a radial position in the vicinity of the cam member holding portion 23. The retainer 9, by the provision of the cut-away portions 43 and 45, is so designed to have a rigidity that is suitable for the one-way clutch 1 to be assembled.

Next, operation states of the one-way clutch 1 relating to the present embodiment having the above mentioned configuration will be described.

In no torque loaded state shown in Fig. 4A, the cam members 7 are in contact with the outer circumferential surface 11 of the inner race 3 and the inner circumferential surface 13 of the outer race 5 by the elastic force of the spring member 15, but no torque is transmitted in this state.
If a certain torque is loaded to the inner race 3 from this state, the respective cam members 7 swing to be brought into engagement with the inner race 3 and the outer race 5 so as to transmit torque. In other words, when the inner race 3 rotates clockwise as shown in Fig.4B along the outer circumferential surface 11 of the inner race 3, the cam members 7 rotate or swing counterclockwise by friction, and are brought into engagement with the outer circumferential surface 11 of the inner race 3 and the inner circumferential surface 13 of the outer race 5, by such engagement torque being transmitted from the inner race 3 to the outer race 5.

At this time, the inner peripheral surface 13 of the outer race 5 is supported by the four bearing portions 31 formed integrally with the retainer 9 and arranged at 90°angular positions along the circumferential direction with respect to the center axis C, so the retainer 9 and the outer race 5 rotate stably together with the inner race 3 in a body.
Further, since the plurality of the cam members 7 are held by four cam holding members 23 which are arranged at 90°angular positions along the circumferential direction with respect to the center axis C, and which respectively hold three cam members, thereby stable engagement between the inner race 3 and the outer race 5 is attained over the circumferential direction. As a result, the inner race 3 and the outer race 5 rotate stably, so no jamming or biting of the cam members 7 to the pair of the column portions 25 forming the windows 29 is caused. Thus, it can be prevented that the one-way clutch 1 becomes inoperative by jamming of the cam members 7 with the retainer 9.

On the other hand, when the inner race 3 rotates counterclockwise from no torque loaded state shown in Fig. 4A, the cam members 7 rotate freely with no engagement of the cam members 7 with the outer peripheral surface 11 of the inner race 3 and the inner peripheral surface 13 of the outer race 5. Accordingly, in this state, there is no torque transmission from the inner race 3 to the outer race 5.

As described above, in the one-way clutch 1 according to the present embodiment, the retainer 9 is composed of a resin, one-way clutch 1 and automatic transmission in which the one-way clutches are assembled can be reduced in weight. Further, the retainer 9 is integrally formed with the bearing portions 31 for supporting the inner peripheral surface 13 of the outer race 5, so no separate bearing is required to support the outer race 5. For this reason, increase in axial dimension of the one-way clutch 1 is prevented, and space for mounting the one-way clutch can be made small and the number of parts can be reduced. Thus, weight reduction of the one-way clutch can be realized.
Furthermore, as described, the inner race 3 and the outer race 5 rotate stably, so no jamming of the cam members 7 with the retainer 9 is caused. Thus, it is prevented that the one-way clutch becomes inoperative by jamming of the cam members 7 with the retainer 9.

Incidentally, the one-way clutch 1 according to the present invention is not limited to the above embodiment but may be modified properly. With respect to the above embodiment, an example of the one-way clutch that transmits torque from the inner race 3 to the outer race 5 has been illustrated, but the present invention may be applied to a one-way clutch which transmits torque from the outer race 5 to the inner race 3. Further, the number of the bearing portions 31 and the number of the cam member holding portions 23 also can be changed properly, depending on the size of the one-way clutch, torque capacity or the like. The number of the cam members 7 held by one cam member holding portion 23 may be changed properly also.

In the above described embodiment, the annular plate 21 is formed with predetermined number of cut-away portions 43 and 45, but the number of the cut-away portions 43 and 45 can be changed appropriately depending on rigidity which the retainer 9 requires, or such cut-away portions 43 and 45 may not be provided.

### REFERENCE SIGNS LIST

1: one-way clutch
3: inner race
5: outer race
7: cam member
9: retainer
11: outer circumferential surface of inner race
13: inner circumferential surface of outer race
15: spring member
21; annular plate
23: cam member holding portion
29: window portion
31: bearing portion
43, 45: cut-away portion

## Claims

1. A one-way clutch having:
an inner race (3);
an outer race (5) arranged on a center axis (C) of said inner race coaxially therewith,
a plurality of cam members (7) interposed between said inner race and said outer race to serve torque transmission between said inner race and said outer race;
a retainer member (9) for holding the plurality of said cam members; and
a spring member (15) biassing the plurality of said cam members to no torque transmitting positions, being **characterized in that**:
the retainer member (9) is provided with a plurality of bearing portions (31) supporting an inner circumferential surface of said outer race and the same number of holding portions (23) as the number of said bearing portions, the holding portions each holding two or more predetermined number of said cam members with predetermined interval along the circumferential direction,
the plurality of said bearing portions (31) is respectively arranged, with respect to said center axis, at diagonal positions along the circumferential direction equiangularly, the plurality of said holding portions (23) is respectively arranged, with respect to said center axis, at diagonal positions along the circumferential direction equiangularly; and
the plurality of said bearing portions (31) and the plurality of said holding portions (23) are arranged alternately along the circumferential direction.

2. A one-way clutch according to claim 1, wherein said retainer is formed of a resin.

3. A one-way clutch according to claim 1 or claim 2,
wherein said retainer (9) is provided with an annular plate (21) arranged on said center axis;
the plural number of said bearing portions (31) and the plural number of said holding portions (23) are formed integrally at an axially one side of said annular plate (21); and
a radially outer edge portion of said annular plate (21) is fitted to the inner circumferential surface of said outer race.

4. A one-way clutch according to claim 3, wherein said bearing portion (31) is provided with a flange portion (27) axially opposed to an axially one side of said outer race.

## Patentansprüche

1. Einwegkupplung, die Folgendes aufweist:
einen inneren Laufring (3);
einen äußeren Laufring (5), der auf einer Mittelachse (C) des inneren Laufrings koaxial damit angeordnet ist,
eine Vielzahl von Nockenelementen (7), die zwischen dem inneren Laufring und dem äußeren Laufring angeordnet sind, um der Drehmomentübertragung zwischen dem inneren Laufring und dem äußeren Laufring zu dienen;
ein Halteelement (9) zum Halten der Vielzahl von Nockenelementen; und
ein Federelement (15), das die Vielzahl von Nockenelementen in nicht drehmomentübertragende Stellungen spannt, **dadurch gekennzeichnet, dass**:
das Halteelement (9) mit einer Vielzahl von Lagerabschnitten (31), die eine Innenumfangsoberfläche des äußeren Laufrings stützen, und der gleichen Anzahl von Halteabschnitten (23) wie die Anzahl der Lagerabschnitte versehen ist, wobei die Halteabschnitte jeweils eine vorgegebene Anzahl von zweien oder mehr der Nockenelemente mit vorgegebenem Abstand entlang der Umfangsrichtung halten,
die Vielzahl der Lagerabschnitte (31) jeweils in Bezug auf die Mittelachse an diagonalen Positionen entlang der Umfangsrichtung gleichwinklig angeordnet sind, wobei die Vielzahl von Halteabschnitten (23) jeweils in Bezug auf die Mittelachse an diagonalen Positionen entlang der Umfangsrichtung gleichwinklig angeordnet sind; und
die Vielzahl der Lagerabschnitte (31) und die Vielzahl der Halteabschnitte (23) entlang der Umfangsrichtung abwechselnd angeordnet sind.

2. Einwegkupplung nach Anspruch 1, wobei der Halter aus einem Harz gebildet ist.

3. Einwegkupplung nach Anspruch 1 oder Anspruch 2,
wobei der Halter (9) mit einer auf der Mittelachse angeordneten ringförmigen Platte (21) versehen ist;
wobei die Mehrzahl der Lagerabschnitte (31) und die Mehrzahl der Halteabschnitte (23) auf einer axial einen Seite der ringförmigen Platte (21) einstückig gebildet sind; und
wobei ein radial äußerer Kantenabschnitt der ringförmigen Platte (21) an der Innenumfangsoberfläche des äußeren Laufrings angebracht ist.

4. Einwegkupplung nach Anspruch 3, wobei der Lagerabschnitt (31) mit einem Flanschabschnitt (27) versehen ist, der einer axial einen Seite des äußeren Laufrings axial entgegengesetzt ist.

## Revendications

1. Embrayage à roue libre ayant :
une cage intérieure (3) ;
une cage extérieure (5) agencée sur un axe central (C) de ladite cage intérieure de manière coaxiale par rapport à celle-ci,
une pluralité d'éléments de came (7) intercalés entre ladite cage intérieure et ladite cage extérieure pour assurer la transmission de couple entre ladite cage intérieure et ladite cage extérieure ;
un élément de retenue (9) servant à supporter la pluralité desdits éléments de came ; et
un élément de ressort (15) sollicitant la pluralité desdits éléments de came vers des positions ne transmettant aucun couple, étant **caractérisé en ce que** :
l'élément de retenue (9) est doté d'une pluralité de parties de butée (31) supportant une surface circonférentielle intérieure de ladite cage extérieure et du même nombre de parties de support (23) que le nombre desdites parties de butée, les parties de support supportant chacune un nombre prédéterminé de deux ou plus parmi lesdits éléments de came avec un intervalle prédéterminé le long de la direction circonférentielle,
la pluralité desdites parties de butée (31) est agencée respectivement, par rapport audit axe central, au niveau de positions diagonales le long de la direction circonférentielle de manière équiangulaire, la pluralité desdites parties de support (23) est agencée respectivement, par rapport audit axe central, au niveau de positions diagonales le long de la direction circonférentielle de manière équiangulaire ; et
la pluralité desdites parties de butée (31) et la pluralité desdites parties de support (23) sont agencées de manière alternée le long de la direction circonférentielle.

2. Embrayage à roue libre selon la revendication 1, dans lequel ledit élément de retenue est formé à partir d'une résine.

3. Embrayage à roue libre selon la revendication 1 ou la revendication 2,
dans lequel ledit élément de retenue (9) est doté d'une plaque annulaire (21) agencée sur ledit axe central ;
la pluralité desdites parties de butée (31) et la pluralité desdites parties de support (23) sont formées d'un seul tenant au niveau d'un côté se trouvant axialement par rapport à ladite plaque annulaire (21) ; et
une partie formant bord radialement extérieur de ladite plaque annulaire (21) est ajustée à la surface circonférentielle intérieure de ladite cage extérieure.

4. Embrayage à roue libre selon la revendication 3, dans lequel ladite partie de butée (31) est dotée d'une partie formant bride (27) axialement opposée à un côté se trouvant axialement par rapport à ladite cage extérieure.
